Europäisches Patentamt

European Patent Office

Office européen des brevets

(11) Veröffentlichungsnummer: **0 132 561**
**B1**

(12) # EUROPÄISCHE PATENTSCHRIFT

(45) Veröffentlichungstag der Patentschrift:
**24.08.88**

(51) Int. Cl.⁴: **H 02 K 11/00**, H 02 K 17/30

(21) Anmeldenummer: **84106511.3**

(22) Anmeldetag: **07.06.84**

(54) **Geregelter Antrieb.**

(30) Priorität: **11.06.83 DE 8317100 U**

(43) Veröffentlichungstag der Anmeldung:
**13.02.85 Patentblatt 85/7**

(45) Bekanntmachung des Hinweises auf die Patenterteilung:
**24.08.88 Patentblatt 88/34**

(84) Benannte Vertragsstaaten:
**CH DE FR GB LI**

(56) Entgegenhaltungen:
CH - A - 462 944
DE - B - 1 513 293
US - A - 3 231 807

SIEMENS ZEITSCHRIFT, Band 49, Nr. 5, 1975 W. VOLKRODT "Wartungsfreie Tachometermaschinen fürdrehzahlstellbare Antriebe" Seiten 313-316

(73) Patentinhaber: **Thyssen-M.A.N. Aufzüge GmbH,
Bernhäuser Strasse 45, D-7303 Neuhausen a.d.F. (DE)**
Patentinhaber: **Loher Aktiengesellschaft,
Hans-Loher-Strasse 32, D-8399 Ruhstorf/Rott (DE)**

(72) Erfinder: **Schöllkopf, Karl-Otto, Dipl.-Ing.,
Stöckenbergweg 44, D-7300 Esslingen (DE)**
Erfinder: **Hutterer, Josef, Dipl.-Ing. (FH), Neufelser
Strasse 4, D-8399 Dommelstadl (DE)**

(74) Vertreter: **Hoeger, Stellrecht & Partner,
Uhlandstrasse 14c, D-7000 Stuttgart 1 (DE)**

**Beschreibung**

Die Erfindung betrifft einen geregelten Antrieb mit einem mit der Welle eines Motors, insbesondere eines Drehstrommotors, verbundenen Drehzahlgeber, mit einem mit der Welle des Motors verbundenen Handrad und mit einer zwischen dem Drehzahlgeber und dem Motor liegenden Reglerschaltung.

Derartige geregelte Antriebe sind bekannt und werden in Aufzuganlagen eingesetzt, in denen mit Hilfe des Drehzahlgebers eine Regelung der Sink- und Steiggeschwindigkeit der Fahrkörbe und gegebenenfalls ein Stillsetzen der Fahrkörbe in vorgegebenen Positionen in den einzelnen Stockwerken erreichbar ist. Dabei werden als Drehzahlgeber üblicherweise Tacho-Generatoren eingesetzt, die mit der Motorwelle durch Kupplungen, Zahnräder oder ähnlichem verbunden sind. Das Handrad dient bei den bekannten geregelten Antrieben im Aufzugsbau dazu, bei einem Netzausfall den Fahrkorb aus einer beliebigen Position im Aufzugschacht in eine Position zu bringen, in der unter Beachtung der üblichen Sicherheitsvorschriften eine Aufzugtüre geöffnet werden kann.

Weiterhin ist aus der DE-B-1 513 293 ein in seiner Drehzahl durch Impulse gesteuerter Elektromotor bekannt, der mit einem Impulsgeber zusammenarbeitet, wobei das Lüfterrad des Motors ausser zur Lüftung als Impulsgeberrad verwendet wird und wobei am Motorgehäuse ein oder mehrere Sensoren angeordnet sind, die durch Öffnungen des Gehäuses hindurch das Lüfterrad abtasten. Dabei werden als Sensoren induktive oder lichtelektrische Abtaster verwendet.

Bei der vorstehend angesprochenen bekannten Konstruktion ist zur Realisierung des Impulsgebers eine Sonderanfertigung des Motors mit geändertem Lüfterrad und mit Bohrungen im Motorgehäuse erforderlich. Ausserdem ermöglicht die bekannte Konstruktion in der Praxis kein Nachrüsten eines bereits vorhandenen Motors. Schliesslich liegen die Teile des Impulsgebers im Umlenkbereich des Kühlluftstroms, wo sie verhältnismässig schnell verschleissen oder verschmutzen, so dass insbesondere lichtelektrisch arbeitende Abtaster vergleichsweise häufig ausgetauscht werden müssen.

Ausgehend von den bekannten geregelten Antrieben mit einem Tacho-Generator als Drehzahlgeber, liegt der Erfindung die Aufgabe zugrunde, einen verbesserten geregelten Antrieb anzugeben, der bei deutlich verringertem Platzbedarf billiger herstellbar, schneller montierbar und mit wartungsfreien Bauteilen ausgerüstet ist.

Gleichzeitig wird angestrebt, dass ein solcher geregelter Antrieb speziell für eine Nachrüstung bereits bestehender Antriebe geeignet sein soll.

Diese Aufgabe wird bei einem geregelten Antrieb der eingangs angegebenen Art gemäss der Erfindung dadurch gelöst, dass der Drehzahlgeber als Drehimpulsgeber ausgebildet und in das Handrad integriert ist.

Ein wichtiger Vorteil des erfindungsgemässen Antriebs, der in der Praxis vorwiegend in Verbindung mit Drehstrommotoren eingesetzt wird, besteht darin, dass ein Drehimpulsgeber kostengünstiger ist als ein üblicher Tacho-Generator und durch die erfindungsgemässe Integration seiner Bauteile in das Handrad nochmals die Kosten gesenkt werden und ausserdem eine ausserordentlich raumsparende Anordnung erreichbar ist. Dies gilt insbesondere im Hinblick darauf, dass bei den bekannten geregelten Antrieben das Handrad normalerweise auf dem einen Ende der Motorwelle sitzt, während der Tacho-Generator mit dem anderen Ende der Motorwelle unter grösserem Aufwand, wie Kupplung usw., verbunden ist, so dass die Gesamtlänge des Aggregats durch das Handrad, den Motor und den Tacho-Generator bestimmt wird, die hintereinander liegend angeordnet sind.

Gemäss einer bevorzugten Ausführungsform der Erfindung ist der Drehimpulsgeber als optischer Drehimpulsgeber mit einer mit dem Handrad verbundenen Lochblende und mit einer relativ zu der Lochblende stationär angeordneten Lichtschrankenanordnung ausgebildet. Diese Lösung ist hinsichtlich der Kosten besonders günstig, da die Lochblende billig und exakt, beispielsweise aus einem Blech- oder Kunststoffstreifen, hergestellt werden kann, der dann einfach mit der Nabe des Handrads verbunden, beispielsweise verschraubt oder verklebt, wird. Ausserdem ist auch die mit der Lochblende zusammenwirkende Lichtschrankenanordnung, die vorzugsweise als Gabellichtschranke ausgebildet wird, ein vergleichsweise preiswertes handelsübliches Bauelement. Um ein Verschmutzen der Lochblende zu vermeiden, ist diese in vorteilhafter Ausgestaltung der Erfindung vorzugsweise von einem ringförmigen Gehäuseelement umgeben, welches Staub, Öl und dergleichen von der Lochblende fernhält und in vorteilhafter Weise durch einen an das Motorgehäuse angeformten Ringflansch gebildet ist, welcher einen stabilen Träger für die Lichtschrankenanordnung und für Dichtungseinrichtungen bilden kann, die vorzugsweise zwischen dem ringförmigen Gehäuseelement und der Lochblende oder der Handradnabe angeordnet werden. Als Dichtungen können z.B. Lippen- oder Labyrinthdichtungen eingesetzt werden.

Ebenso ist der Einsatz von Dichtungen in Form eines Bürsten- oder Borstenkranzes vorteilhaft, weil bei einem derartigen Borstenkranz nur eine geringe Reibung auftritt und andererseits Schmutzpartikel dennoch sicher zurückgehalten werden.

In weiterer Ausgestaltung der Erfindung kann anstelle einer Lochblende an dem Handrad eine Spur aus alternierend aufeinanderfolgenden hellen und dunklen Streifen vorgesehen werden, die beispielsweise mit einer Reflexionslichtschranke abgetastet werden können. Die genannte Spur kann dabei direkt auf die Nabe des Handrads aufgezeichnet oder auf einer Hülse oder Scheibe vorgesehen sein, welche auf die Nabe des Handrads aufgesetzt wird.

Ferner besteht die Möglichkeit, an der Nabe des Handrads eine Zahnung anzuformen bzw. anzubringen, deren Zähne bei einer Drehung des Handrads Impulse in einem zugeordneten Näherungsschalter auslösen.

Unabhängig von der Ausführungsform im einzelnen bringt der erfindungsgemäss verwendete Drehimpulsgeber den zusätzlichen Vorteil mit sich, dass die einzelnen Impulse nicht nur aufgrund ihrer Impulsfolgefrequenz Aufschluss über die Drehzahl der Motorwelle geben, sondern in Verbindung mit entsprechenden digitalen Auswerteinrichtungen auch eine exakte winkelmässige Positionierung der Motorwelle gestatten, wobei durch entsprechende Codierung der Öffnungen der Lochblende, der Zahnung an der Nabe oder der hellen und dunklen Streifen an der an der Nabe vorgesehenen Spur auch dafür gesorgt werden kann, dass nach jeder vollen Umdrehung der Motorwelle ein besonderes, von den übrigen Signalen unterscheidbares Signal erzeugt wird.

Weitere Einzelheiten und Vorteile eines Ausführungsbeispieles der Erfindung werden nachstehend anhand von Zeichnungen noch näher erläutert. Es zeigen:

Fig. 1 eine Teil-Seitenansicht der wesentlichen Teile eines Drehstrommotorantriebs gemäss der Erfindung, wobei einige Teile weggebrochen und andere im Schnitt dargestellt sind;

Fig. 2 einen Querschnitt durch die Anordnung gemäss Fig. 1 längs der Linie 2–2 dieser Figur;

Fig. 3 einen Querschnitt durch die Anordnung gemäss Fig. 2 längs der Linie 3–3 in dieser Figur und

Fig. 4 ein schematisches Schaltbild von mit einer Gabellichtschranke des erfindungsgemässen Drehstrommotorantriebs verbundenen Auswerteeinrichtungen.

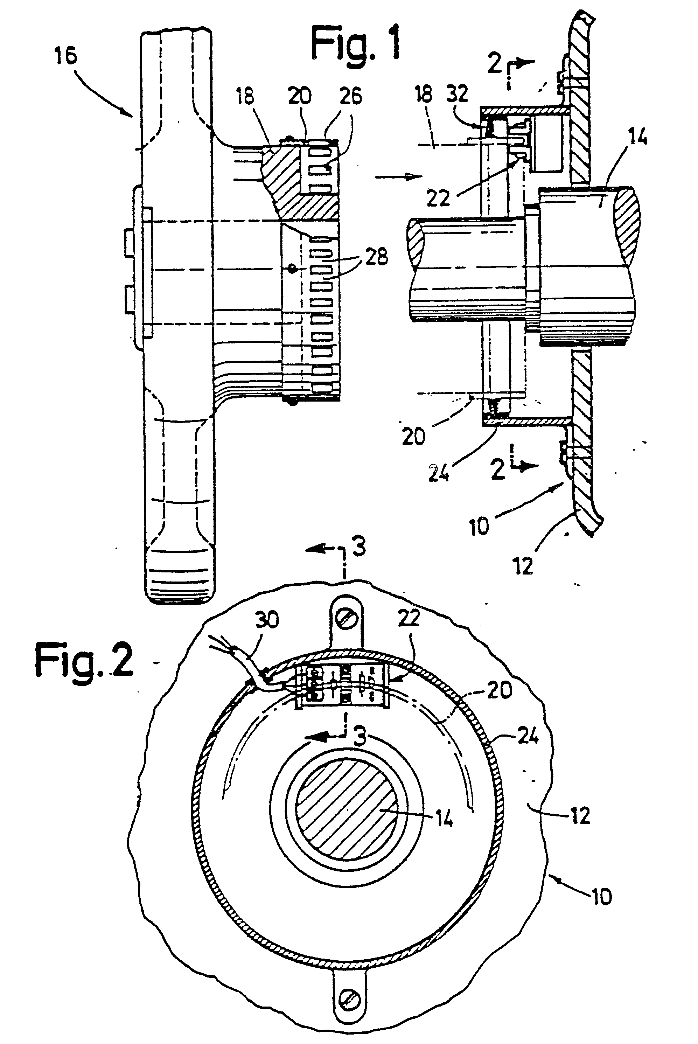

Im einzelnen zeigt Fig. 1 einen Motor 10, von dem nur das linke Ende des Gehäuses 12 und die Motorwelle 14 dargestellt sind. Ferner zeigt Fig. 1 den inneren Teil eines Handrads 16, an dessen Nabe 18 eine Lochblende 20 befestigt ist und welches normalerweise mit dem angrenzenden Ende der Motorwelle 14 verbunden, beispielsweise verkeilt und verschraubt, ist. Zur Erhöhung der Übersichtlichkeit wurde das Handrad 16 in Fig. 1 jedoch in einem gewissen Abstand vom Motor 10 dargestellt.

Die Lochblende 20, die aus Flachmaterial oder Rohrmaterial hergestellt werden kann, wirkt mit einer ortsfest montierten Lichtschranke, und zwar speziell einer Gabellichtschranke 22, zusammen, die beim Ausführungsbeispiel von einem ringförmigen Gehäuseelement 24 getragen wird, welches seinerseits am Motorgehäuse 12 konzentrisch zur Motorwelle 14 montiert ist. Wenn das Handrad 16 in seiner Betriebsstellung am Motor 10 montiert ist und die in Fig. 1 mit strichpunktierten Linien eingezeichnete Lage einnimmt, dann kann der Lichtstrahl der Gabellichtschranke 22 die Öffnungen 26 der Lochblende 20 passieren, während er durch die Stege 28 zwischen den Öffnungen 26 jeweils unterbrochen wird. Wenn sich also das Handrad 16 gemeinsam mit der Welle 14 gegenüber dem Gehäuse 12 des Motors 10 dreht, dann wird über die Ausgangsleitungen 30 der Gabellichtschranke 22 eine Impulsfolge ausgegeben, deren Impulsfolgefrequenz zur Drehzahl der Motorwelle 14 proportional ist.

Man erkennt, dass der erfindungsgemäss als Drehzahlgeber verwendete Drehimpulsgeber keine Vergrösserung der Baulänge auf der dem Handrad 16 zugewandten Seite des Motors 10 bewirkt, während gleichzeitig der übliche Tacho-Generator, der eine erhebliche Baulänge besitzt, auf der anderen Seite des Motors 10 entfallen kann. Ausserdem sind sowohl die Lochblende 20 als auch die Gabellichtschranke 22 und gegebenenfalls das ringförmige Gehäuseelement 24 vergleichsweise einfache und billige Bauelemente, deren Kosten insgesamt deutlich geringer sind als die Kosten für einen üblichen Tacho-Generator.

Ausgehend von dem Ausführungsbeispiel gemäss Fig. 1 und 2 lässt sich, wie eingangs schon angeführt, eine gleichartige Verringerung der Baulänge und eine ähnliche Verringerung der Kosten dadurch erreichen, dass man anstelle der Lochblende 20 an der Nabe 18 des Handrads 16 eine Spur mit aufeinanderfolgenden hellen und dunklen bzw. stärker und schwächer reflektierenden Bereichen vorsieht, die dann beispielsweise mit einer Reflexions-Lichtschranke abgetastet werden können.

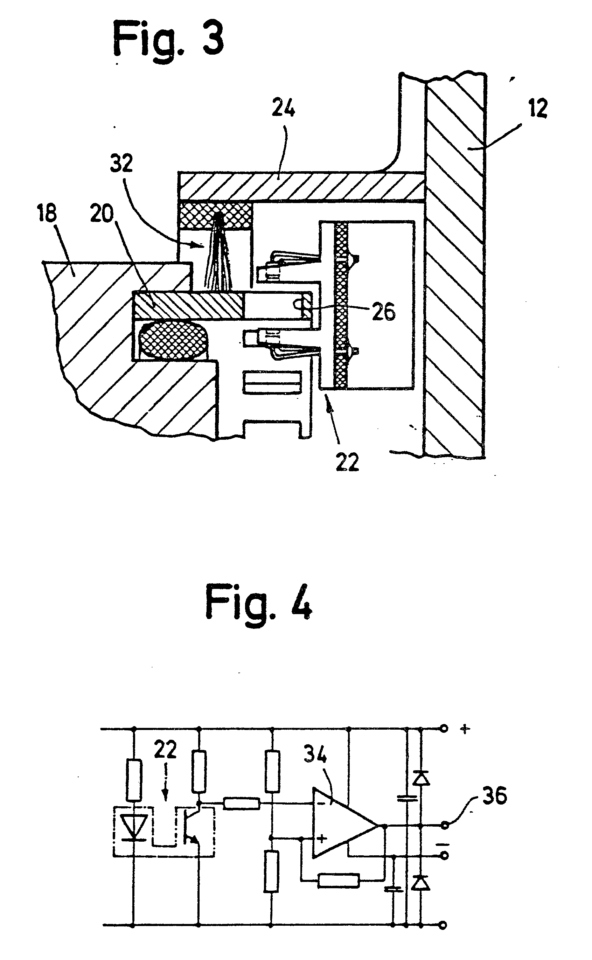

Wie aus Fig. 2 und 3 ferner deutlich wird, kann die beim Ausführungsbeispiel offene, in Fig. 1 und 3 linke Seite des ringförmigen Gehäuseelements 24 noch mit einer Borstendichtung 32 versehen sein, welche die Lochblende 20 und die Lichtschranke 22 gegen eine Verschmutzung schützt. Auch hinsichtlich der Ausgestaltung des Gehäuseelements 24 bieten sich dabei wieder zahlreiche Möglichkeiten, wobei es besonders vorteilhaft ist, wenn das ringförmige Gehäuseelement als ein an das Motorgehäuse 12 angeformter Ringflansch ausgebildet wird. Ebenso zeigt Fig. 3 eine weitere beispielhafte Art einer Verbindung zwischen Handrad und Lochblende mit einem einfachen O-Ring.

Fig. 4 zeigt ein elektrisches Schaltbild der Gabellichtschranke 22 und zugehörige Teile einer Auswerteschaltung, die beim betrachteten Ausführungsbeispiel einen rückgekoppelten Operationsverstärker 34 umfasst, an dessen Ausgang 36 die von der Gabellichtschranke 22 erzeugte Impulsfolge als verstärkte Rechteckimpulsfolge zur Verfügung steht, die nicht nur als zur Drehzahl proportionales Signal für eine Regler verwendet werden kann, sondern deren Impulse auch zur exakten winkelmässigen Positionierung der Motorwelle 14 dienen können, insbesondere wenn, wie eingangs angedeutet, der Drehimpulsgeber derart ausgebildet ist, dass bei jeder vollen Umdrehung der Motorwelle 14 bzw. des Handrads 16 ein besonderes Signal erzeugbar ist, wie z.B. ein Doppelimpuls oder ein Impuls mit Überlänge.

In vorteilhafter Ausgestaltung der Erfindung besteht die Möglichkeit, mittels einer weiteren Lichtschranke in üblicher Weise zusätzlich zur Drehzahl auch die Drehrichtung zu ermitteln. Für die weitere Lichtschranke kann eine eigene Lochblende bzw. eine weitere Spur von Öffnungen vorgesehen sein.

**Patentansprüche**

1. Geregelter Antrieb mit einem mit der Welle (14) eines Motors (10), insbesondere eines Drehstrommotors, verbundenen Drehzahlgeber, mit einem mit der Welle (14) des Motors (10) verbundenen Handrad (16) und mit einer zwischen dem Drehzahlgeber und dem Motor (10) liegenden Reglerschaltung, dadurch gekennzeichnet, dass der Drehzahlgeber als Drehimpulsgeber (20, 22) ausgebildet und in das Handrad (16) integriert ist.

2. Antrieb nach Anspruch 1, dadurch gekennzeichnet, dass der Drehimpulsgeber als optischer Drehimpulsgeber mit einer mit dem Handrad (16) verbundenen Lochblende (20) und mit einer relativ zu der Lochblende (20) stationär angeordneten Lichtschrankenanordnung (22) ausgebildet ist.

3. Antrieb nach Anspruch 2, dadurch gekennzeichnet, dass zur Erkennung der Drehrichtung mindestens eine weitere Lochblende und/oder eine weitere Lichtschrankenanordnung angeordnet ist.

4. Antrieb nach Anspruch 2, dadurch gekennzeichnet, dass die Lichtschrankenanordnung als Gabellichtschranke (22) ausgebildet ist.

5. Antrieb nach Anspruch 2, dadurch gekennzeichnet, dass hinsichtlich der Lichtschrankenanordnung (22) eine Reflexlichtschranke angebracht ist und dass unterschiedlich reflektierende Flächen am Handrad (16) angeordnet sind.

6. Antrieb nach Anspruch 2 oder 3, dadurch gekennzeichnet, dass die Lichtschrankenanordnung (22) an einem ortsfest montierten, die Lochblende (20) aussen umgebenden Gehäuseelement angeordnet ist.

7. Antrieb nach Anspruch 4, dadurch gekennzeichnet, dass das Gehäuseelement (24) fest mit dem Gehäuse (12) des Motors (10) verbunden ist.

8. Antrieb nach Anspruch 5, dadurch gekennzeichnet, dass das Gehäuseelement (24) durch einen an das Motorgehäuse (12) angeformten Ringflansch gebildet ist.

9. Antrieb nach Anspruch 5 oder 6, dadurch gekennzeichnet, dass zwischen dem stationären Gehäuseelement (24) und dem drehbaren Handrad (16) bzw. der daran vorgesehenen Lochblende (20) eine Dichtung (32) vorgesehen ist.

10. Antrieb nach Anspruch 1, dadurch gekennzeichnet, dass das Handrad (16) gewicht- und kostensparend aus Leichtmetall, Kunststoff oder anderen leichten Materialien hergestellt ist.

11. Antrieb nach Anspruch 2, dadurch gekennzeichnet, dass die Loch- bzw. Schlitzblende (20) gewicht- und kostensparend aus durchsichtigem Trägermaterial mit mechanisch oder chemisch aufgebrachten undurchsichtigen Bereichen hergestellt ist.

**Claims**

1. A controlled drive having a rotary speed indicator connected to the shaft (14) of a motor (10), in particular a three-phase motor, a handwheel (16) connected to the shaft (14) of the motor (10), and a controller circuit situated between the rotary speed indicator and the motor (10), characterized in that the rotary speed indicator is designed as a rotary impulse indicator (20, 22) and is integrated in the handwheel (16).

2. A drive according to Claim 1, characterized in that the rotary impulse indicator is designed as an optical rotary impulse indicator with an apertured light stop (20) connected to the handwheel (16) and a light barrier arrangement (22) disposed stationary relative to the apertured light stop (20).

3. A drive according to Claim 2, characterized in that, in order to detect the direction of rotation, at least one further apertured light stop and/or one further light barrier arrangement is provided.

4. A drive according to Claim 2, characterized in that the light barrier arrangement is designed as a branched light barrier.

5. A drive according to Claim 2, characterized in that with respect to the light barrier arrangement (22) a reflex light barrier is provided, and differently reflecting surfaces are formed on the handwheel (16).

6. A drive according to Claim 2 or 3, characterized in that the light barrier arrangement (22) is disposed on a housing element which is mounted so as to be stationary and which surrounds the apertured light stop (20) on the outside.

7. A drive according to Claim 4, characterized in that the housing element (24) is securely connected to the housing (12) of the motor (10).

8. A drive according to Claim 5, characterized in that the housing element (24) is formed by an annular flange integrally formed on the motor housing (12).

9. A drive according to Claim 5 or 6, characterized in that a seal (32) is provided between the stationary housing element (24) and the rotatable handwheel (16) or alternatively the apertured light stop (20) provided thereon.

10. A drive according to Claim 1, characterized in that the handwheel (16) is produced from light metal, plastics or other light materials in order to reduce weight and costs.

11. A drive according to Claim 2, characterized in that the apertured or slit light stop (20) is produced from transparent base material with opaque areas applied mechanically or chemically in order to reduce weight and costs.

**Revendications**

1. Entraînement réglé, comportant: un capteur de vitesse de rotation lié à l'arbre (14) d'un moteur (10), notamment d'un moteur à courant triphasé; un volant à main (16) lié à l'arbre (14) de ce moteur (10); et un circuit de réglage monté entre le capteur de vitesse de rotation et le moteur (10), caractérisé par le fait que le capteur de vitesse de rotation est aménagé en tant qu'émetteur d'impulsions de rotation (20, 22) et est intégré dans le volant à main (16).

2. Entraînement selon revendication 1, caractérisé par le fait que l'émetteur d'impulsions de rotation est réalisé en tant qu'émetteur optique d'impulsions de rotation doté d'un masque à trous (20) lié au volant à main (16) et d'un agencement de barrière photoélectrique (22) agencé fixe par rapport au masque à trous (20).

3. Entraînement selon revendication 2, caractérisé par le fait qu'au moins un autre masque à trous et/ou un autre agencement de barrière photoélectrique est prévu pour identifier le sens de rotation.

4. Entraînement selon revendication 2, caractérisé par le fait que l'agencement de barrière photoélectrique est réalisé sous la forme d'une barrière photoélectrique à chevauchement (22).

5. Entraînement selon revendication 2, caractérisé par le fait qu'une barrière photoélectrique opérant par réflexion est agencée pour constituer l'agencement de barrière photoélectrique (22), et par le fait que des surfaces réfléchissant différemment sont agencées sur le volant à main (16).

6. Entraînement selon revendication 2 ou 3, caractérisé par le fait que l'agencement de barrière photoélectrique (22) est situé sur un élément de carter monté fixe, entourant extérieurement le masque à trous (20).

7. Entraînement selon revendication 4, caractérisé par le fait que l'élément de carter (24) est solidarisé au carter (12) du moteur (10).

8. Entraînement selon revendication 5, caractérisé par le fait que l'élément de carter (24) est constitué par un collet annulaire formé sur le carter (12) du moteur.

9. Entraînement selon revendication 5 ou 6, caractérisé par le fait qu'un organe d'étanchéité (32) est prévu entre l'élément de carter fixe (24) et le volant à main (16) pouvant tourner ou le masque à trous (20) prévu dans celui-ci.

10. Entraînement selon revendication 1, caractérisé par le fait que le volant à main (16) est réalisé, de manière à être léger et économique, en métal léger, matière plastique ou autre matériau léger.

11. Entraînement selon revendication 2, caractérisé par le fait que le masque à trous ou fentes (20) est réalisé, de manière à être léger et économique, en un matériau-support transparent doté de zones opaques aménagées mécaniquement ou chimiquement.

0 132 561

# Fig. 1

# Fig.2

7

# Fig. 3

# Fig. 4